**Europäisches Patentamt**

**European Patent Office**

**Office européen des brevets**

(19)

(11) Veröffentlichungsnummer: **0 042 588**
A2

## (12) EUROPÄISCHE PATENTANMELDUNG

(21) Anmeldenummer: **81104667.1**

(22) Anmeldetag: **17.06.81**

(51) Int. Cl.³: **B 01 F 7/30**
B 01 F 13/06, F 26 B 11/00

(30) Priorität: **19.06.80 DE 3022867**
**25.06.80 DE 3023826**
**24.10.80 DE 3040100**

(43) Veröffentlichungstag der Anmeldung:
**30.12.81 Patentblatt 81/52**

(84) Benannte Vertragsstaaten:
**AT BE FR GB IT NL**

(71) Anmelder: **Bolz, Alfred sen**
**Postfach 162**
**D-7988 Wangen/Allg(DE)**

(72) Erfinder: **Bolz, Alfred sen**
**Postfach 162**
**D-7988 Wangen/Allg(DE)**

(74) Vertreter: **Riebling, Günter, Dr. Patentanwälte et al,**
**Dr.-Ing., Dipl.-Ing., Ing.(grad) G. Riebling Dr.-Ing.,**
**Dipl.-Ing. P. Riebling Rennerle 10 Postfach 3160**
**D-8990 Lindau(Bodensee)(DE)**

(54) **Konus-Schneckenmischer.**

(57) Gegenstand der Erfindung ist ein Konus-Schneckenmischer, bestehend aus einem konischen Mischbehälter mit einer parallel zur Innenwand an einem Schwenkarm umlaufenden, sich drehenden Mischschnecke, ferner eine Vorrichtung zur Zumischung flüssiger, pastöser und pulverförmiger Stoffe in einem Konus-Schneckenmischer und eine Vorrichtung zur Trocknung von Mischprodukten.

Aufgabe der vorliegenden Erfindung ist, einen Konus-Schneckenmischer so weiterzubilden, dass eine wesentlich grössere Menge von Füllgut aufbereitet und gemischt werden kann.

Zur Lösung der Aufgabe ist der Schwenkarm zumindest teilweise im Innenraum des gewölbten Behälterdeckels angeordnet.

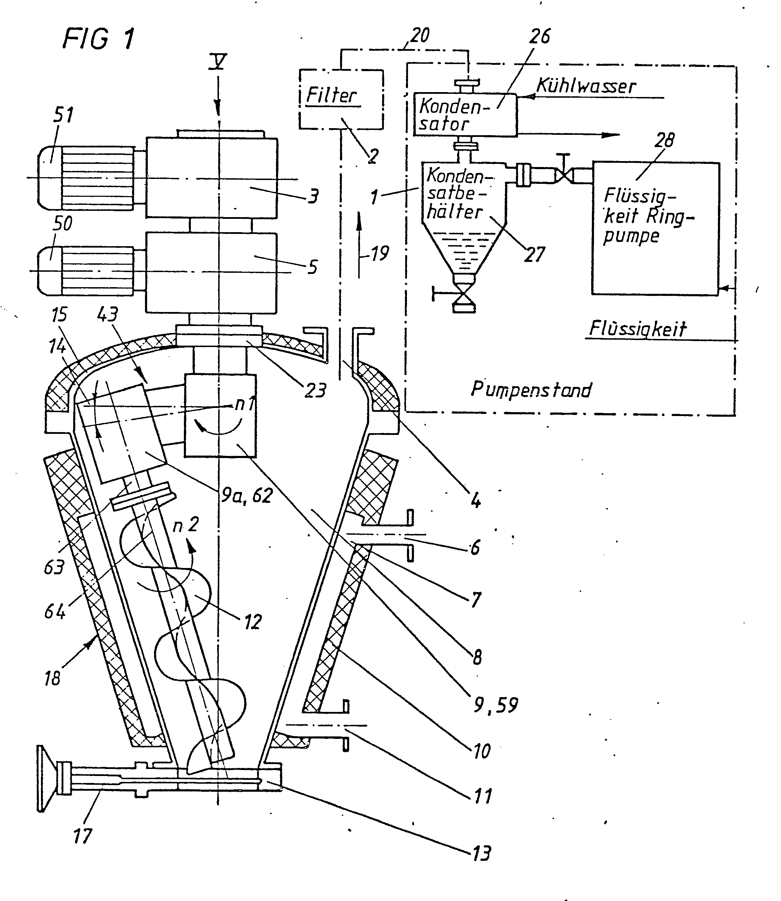

Fig. 1 zeit schematisiert den Längsschnitt durch den Konus-Schneckenmischer.

Weitere Aufgabe ist, dass eine Zumischung flüssiger, pastöser und pulverförmiger Stoffe während des Betrieb es, gleichgültig, ob Vakuum oder Überdruck besteht, des Konus-Schneckenmischers möglich ist.

Die Lösung erfolgt dadurch, dass koaxial in der rotierenden Antriebshohlwelle ein Zumischrohr aufgenommen ist, das jeweils stirnseitig einerseits aus dem oberen Ende der Antriebshohlwelle herausragt und andererseits aus dem unteren Ende der Antriebshohlwelle ragt und in den Mischraum des Mischbehälters ragt.

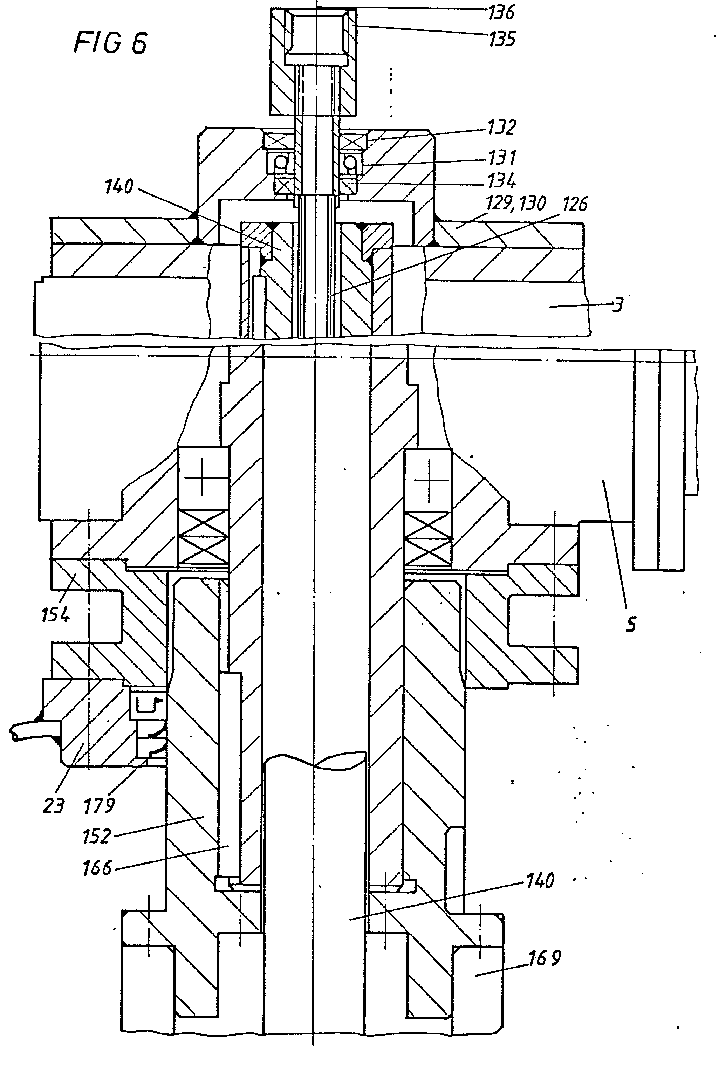

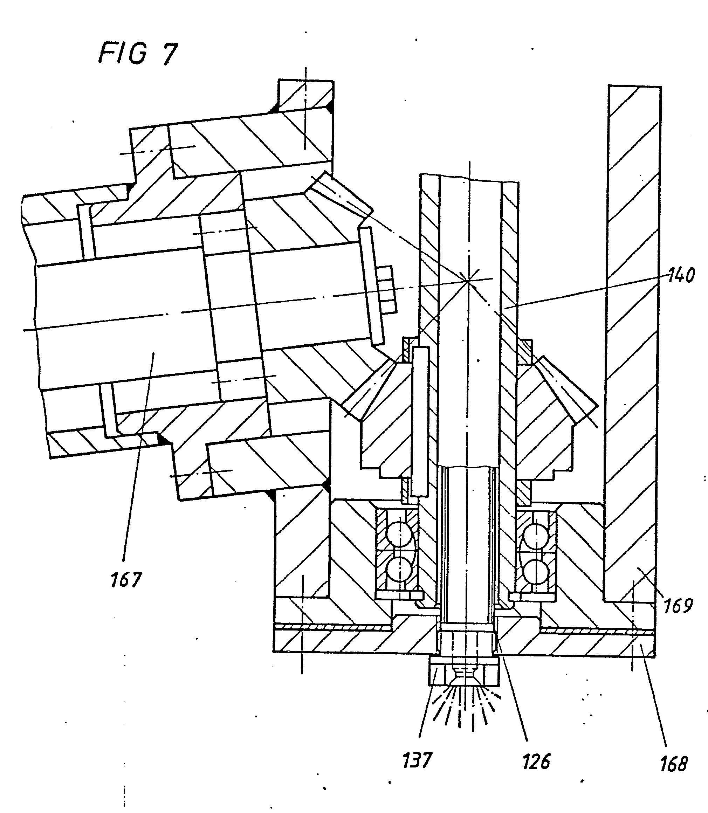

Fig. 6 zeigt einen Vertikal-Längsschnitt durch den Antriebsteil des Schneckenmischers (oberer Teil der Fig. 6) und Fig. 7 durch den unteren Teil. Fig. 1 zeigt die erfindungsgemässe Trocknung bei einem Konus-Schneckenmischer.

FIG 1

EP 0 042 588 A2

FIG 6

FIG 7

Konus-Schneckenmischer
------------------------

Gegenstand der Erfindung ist ein Konus-Schneckenmischer, bestehend aus einem konischen Mischbehälter mit einer parallel zur Innenwand an einem Schwenkarm umlaufenden, sich drehenden Mischschnecke.

Weiterer Erfindungsgegenstand ist eine Vorrichtung zur Zumischung flüssiger, pastöser und pulverförmiger Stoffe in einen Konus-Schneckenmischer und eine Vorrichtung zur Trocknung von Mischprodukten, bestehend aus einem in Richtung zur Bodenfläche konisch zulaufenden Mischbehälter, in dem eine Mischschnecke angeordnet ist, und einer an der Wandung des Mischbehälters angeordneten Beheizung.

Aufgabe der vorliegenden Erfindung ist es, einen Konus-Schneckenmischer der eingangs genannten Art so weiterzubilden, daß - bezogen auf gleiche Außenabmessungen (Raumbedarf) des Konus-Schneckenmischers - eine wesentlich größere Menge von Füllgut aufbereitet und gemischt werden kann.

Zur Lösung der gestellten Aufgabe ist die Erfindung dadurch gekennzeichnet, daß der Schwenkarm zumindest teilweise im Innenraum des gewölbten Behälterdeckels angeordnet ist.

Wesentliches Merkmal der vorliegenden Erfindung ist also, daß der Behälterdeckel nun nicht mehr - wie bisher bekannt - gerade ausgebildet ist, sondern gewölbt. Ferner ist wesentlich, daß die Getriebe für den Drehantrieb der Mischschnecke und für den Drehantrieb des Schwenkarmes (wobei die Mischschnecke am freien Ende des Schwenkarmes angeordnet ist) zumindest teilweise im Innenraum des gewölbten Behälterdeckels angeordnet sind.

Hierdurch wird der Vorteil erzielt, daß die Füllhöhe des Behälters bei gleichbleibenden Außenabmessungen wesentlich gesteigert werden kann, weil die Getriebe für den Antrieb des Schwenkarmes in der Mischschnecke nicht mehr in den Mischraum eingreifen, sondern im Bereich des gewölbten Behälterdeckels angeordnet sind.

In einer ersten Ausführungsform der vorliegenden Erfindung sind die Getriebe für den Drehantrieb der Mischschnecke und für den Drehantrieb des Schwenkarmes vollständig im Bereich des gewölbten Behälterdeckels angeordnet.

In einer zweiten Ausführungsform sind diese Getriebe zumindest teilweise im gewölbten Behälterdeckel angeordnet und greifen nur noch in geringem Umfang unterhalb der Unterkante des Behälterdeckels in den nicht-ausnützbaren Mischraum des Konus-Schneckenmischers.

Die Vergrößerung der Füllhöhe wird also dadurch erreicht, daß die Getriebe für den Drehantrieb der Mischschnecke und für den Drehantrieb des Schwenkarmes der Innenwölbung des Behälterdeckels angepaßt sind.

Es kommt hierbei nicht auf die Art und Ausführung der Getriebe an. Es können sowohl hydraulische Getriebe als auch mechanische Getriebe jedweder Art verwendet werden. Im Rahmen der vorliegenden Erfindung werden jedoch Kegelradgetriebe bevorzugt, weil bei hydraulischen Getrieben die Gefahr besteht, daß Druckflüssigkeit auslaufen könnte. Der vorliegende Erfindungsgedanke umfaßt also sowohl Kegelradgetriebe, als auch andere mechanische oder hydraulische Getriebe jedweder Art. Es kommt nur darauf an, daß die Art und Anordnung der Getriebe so getroffen ist, daß sie der Innenform des gewölbten Behälterdeckels angeordnet sind und hierdurch platzsparend im Innenraum des Konus-Schneckenmischers montiert sind.

In einer bevorzugten Ausgestaltung der vorliegenden Erfindung ist ein Kegelradgetriebe derart vorgesehen, daß der Antrieb des Schwenkarmes durch eine zentral und abdichtend den Behälterdeckel durchgreifende Hohlwelle erfolgt, die auf zwei im Abstand voneinander angeordnete, von Gehäusen ummantelte Kegelradgetriebe arbeitet, wobei das am fernen Ende des Schwenkarmes angeordnete Gehäuse um einen Winkel in Richtung zur Horizontalen nach unten geneigt ist.

Durch diese Neigung des Antriebsgetriebes erfolgt die oben beschriebene Anpassung des Getriebe-Einbaus an die Neigung des Behälterdeckels, wodurch der Vorteil der Platzersparnis und die hieraus resultierende Erhöhung der Füllhöhe gegeben ist.

In einer bevorzugten Ausführungsform der vorliegenden Erfindung wird es bevorzugt, wenn der Winkel zur Horizontalen den Betrag von 8 1/2 $^{\text{o}}$ beträgt.

Es wird hierbei bevorzugt, wenn die Hohlwelle aus einer Antriebshohlwelle besteht und aus einer mit dieser drehfest verbundenen Verbindungshohlwelle, die in dem ersten Gehäuse drehfest mit einem Kegelrad verbunden ist, das mit einem in seiner Längsachse im vorgenannten

- 4 -

Winkel zur Horizontalen nach unten geneigten, weiteren Kegelrad in Eingriff steht, wobei dieses Kegelrad über eine Antriebswelle drehfest mit einem weiteren Kegelrad verbunden ist, das seinerseits mit einem Kegelrad kämmt, das drehfest mit der Schneckenwelle der Mischschnecke verbunden ist.

Durch die Verwendung der genannten Kegelräder läßt sich die geforderte Anpassung (Neigung des Getriebes in Richtung zur Horizontalen) an die Innenform des gewölbten Behälterdeckels besonders einfach erreichen.

Hierbei wird es bevorzugt, wenn der Drehantrieb des Schwenkarmes dadurch erfolgt, daß über ein von einem Antriebsmotor beaufschlagtes Getriebe die Hohlwelle angetrieben ist, die über eine Paßfeder drehfest mit dem Schwenkarmgehäuse verbunden ist.

Das Schwenkarmgehäuse ist also zentral in der Mitte des Behälterdeckels an dessen Unterseite angeordnet, wodurch sich durch die zentrale Anordnung bei einem rotationssymmetrisch gewölbten Behälterdeckel eine weitere Platzersparnis ergibt.

Die Getriebe der Antriebskette sind in einer bevorzugten Ausführungsform so ausgebildet, daß die Mischschnecke mit etwa 60 Umdrehungen pro Minute und der Schwenkarm mit etwa 2 Umdrehungen pro Minute angetrieben sind.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Fig. 1 schematisiert gezeichneter Längsschnitt durch den Konus-Schneckenmischer;

Fig. 2 Teil-Längsschnitt durch den Dreh- und Schwenkantrieb der Mischschnecke bei einem Konus-Schneckenmischer gemäß Fig. 1;

Fig. 3 vertikaler Längsschnitt durch den Konus-Schneckenmischer gemäß Fig. 1 mit Darstellung weiterer Einzelheiten;

Fig. 4 Seitenansicht des oberen Teils des Konus-Schneckenmischers mit Darstellung zusätzlicher, konstruktiver Einzelheiten;

Fig. 5 Draufsicht auf den Konus-Schneckenmischer gemäß Fig. 1 in Richtung des Pfeiles V- in Fig. 1.

Der Konus-Schneckenmischer gemäß Fig. 1 besteht aus einem konus-förmigen Mischbehälter 18, der an seiner oberen Behälteröffnung durch einen gewölbten Behälterdeckel 15 abgeschlossen ist.

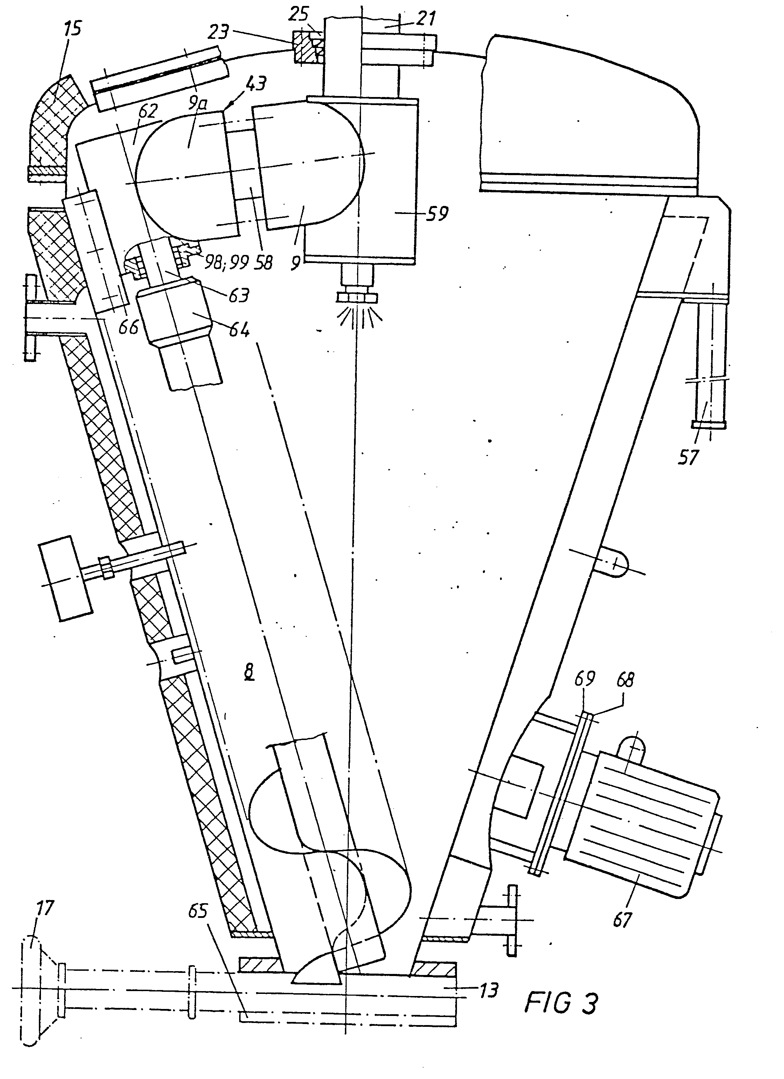

Die Verbindung zwischen der Oberseite des Mischbehälters 18 und der Unterseite des gewölbten Behälterdeckels 15 erfolgt durch eine Flanschverbindung, die in der Fig. 3 näher dargestellt ist.

Der Konus-Schneckenmischer ist beheizt ausgeführt, dadurch, daß ein Doppelmantel 10 vorgesehen ist, der von einem Heizmedium durchflossen wird. Das Heizmedium, z.B. Heizdampf, tritt an dem Stutzen 6 des Doppelmantels 10 ein, und tritt am Stutzen 11 wieder aus, wo auch der Kondensat-Ablauf erfolgt.

Der Heizmantel 7 ist am Außenumfang wärme-isoliert ausgebildet, z.B. durch Ausfüllen der Hohlräume mittels Steinwolle.

Parallel zur Behälter-Innenwandung des Mischraumes 8 ist eine Mischschnecke 12 angeordnet, die in einer bevorzugten Ausführungsform mit einer Umdrehung $n_2$ von 60 Umdrehungen pro Minute von dem Antriebsmotor 51 und dem Getriebe 3 angetrieben wird. Die Schneckenwelle 64 ist drehfest mit einer Antriebswelle 63 verbunden, die am freien, umlaufenden Ende des Schwenkarmes 43 angeordnet ist. Der Schwenkarm 43 ist in einer bevorzugten Ausführungsform der vorliegenden Erfindung mit einer Drehzahl $n_1$ von 2 Umdrehungen pro Minute über den Antriebsmotor 50 und das Getriebe 5 angetrieben.

Die Getriebe für den Drehantrieb der Mischschnecke 12 und den Drehantrieb des Schwenkarmes 43 sind in Gehäusen 9,9a angeordnet, die im wesentlichen im Bereich des gewölbten Innenraumes des Behälterdeckels 15 angeordnet sind. Die während des Mischvorganges anfallenden Stäube, Dämpfe und Gase werden über einen Absaugstutzen 4 abgesaugt und durch einen Filter 2 geleitet, Die Absaugung erfolgt mit Hilfe eines Pumpenstandes 1, so daß die abgesaugten Stoffe zunächst einen mit Kühlwasser durchströmten Kondensator durchfließen und in einem Kondensatbehälter aufgefangen werden. Der Mischvorgang kann unter Vakuum stattfinden; hierzu ist dann eine Flüssigkeitsringpumpe vorgesehen, welche das im Mischraum 8 hierfür erforderliche Vakuum erzeugt.

Der untere Teil des Mischraumes ist von einem Trennschieber 17 abgeschlossen, der handbetätigt ist und einen Auslauf 13 verschließt oder freigibt.

Wesentlich ist, daß das Gehäuse 9 des Getriebes in Bezug zu dem Gehäuse 9a um einen Winkel 14 in Richtung zur Horizontalen nach unten geneigt ist. Hierdurch erfolgt die beschriebene Anpassung an die Wölbung des Behälterdeckels 15 und die damit verbundene Platzeinsparung.

Aus mischungstechnischen Gründen wird beim Aufbereiten des Mischgutes zunächst der Antrieb für die Mischschnecke 12 eingeschaltet, während der Schwenkarmantrieb nicht eingeschaltet ist. Es wird eine gewisse Zeit lang zunächst das Mischgut entlang der Mischschnecke 12 nach oben gefördert.
Erst nach Ablauf einer gewissen Zeit wird der zweite Antrieb (für den Schwenkarm 43) eingeschaltet und die Mischschnecke 12 läuft dann entlang der Innenwandung des Mischbehälters 18. Dieser Vorgang ist eine Überlastsicherung.

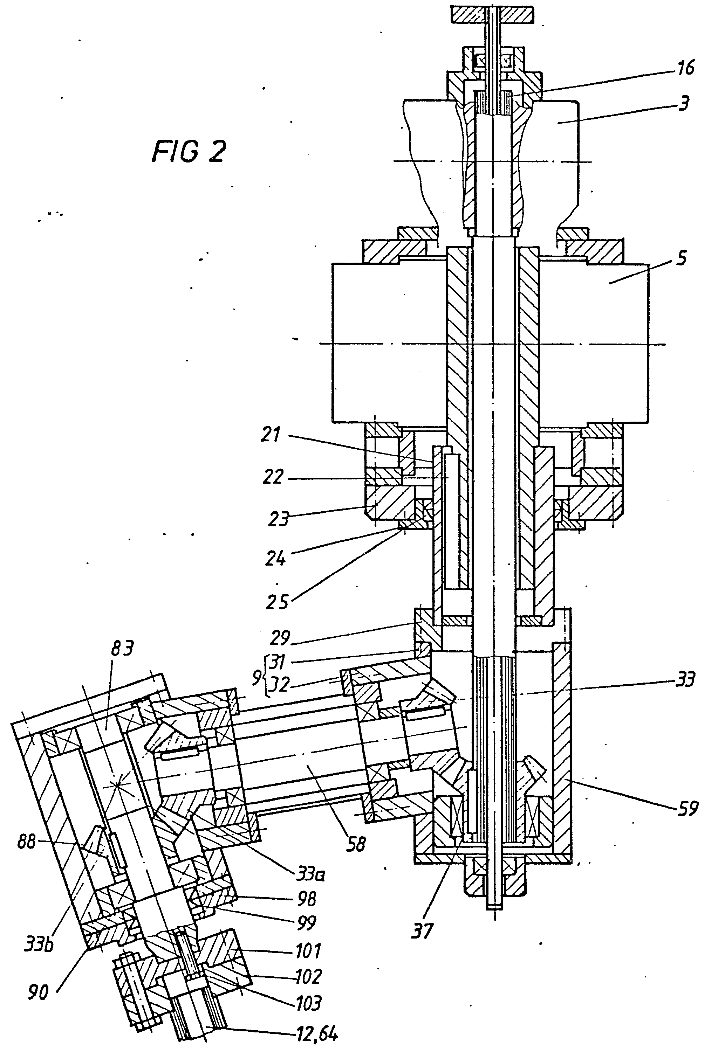

Zur weiteren Erläuterung des Antriebes der Mischschnecke und des Schwenkarmes wird auf die Fig. 2 Bezug genommen.

Der gewölbte Behälterdeckel 15 gemäß Fig. 1 weist einen Flansch 23 gemäß Fig. 2 auf, in dem Dichtringe 25 angeordnet sind, die koaxial von der Verbindungshohlwelle 21 durchgriffen werden. Die Verbindungshohlwelle ist hiermit dicht in den Dichtringen 25 gefaßt; damit ist es möglich, den Konus-Mischer mit einem unterschiedlichen Druck zur Atmosphäre im Mischraum 8 zu betreiben.

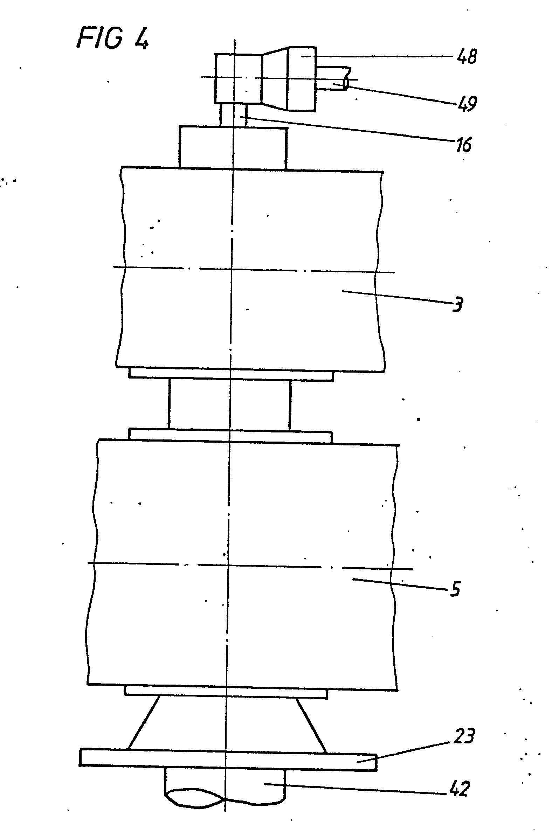

Aus Fig. 4 läßt sich entnehmen, daß der Flansch 23 in ein erstes Getriebe 5 einmündet. Dieses Getriebe ist dem Schwenkarmantrieb zugeordnet, während das zweite Getriebe 3, das der Mischschnecke 12 zugeordnet ist, über dem ersten Getriebe 5 angeordnet ist.

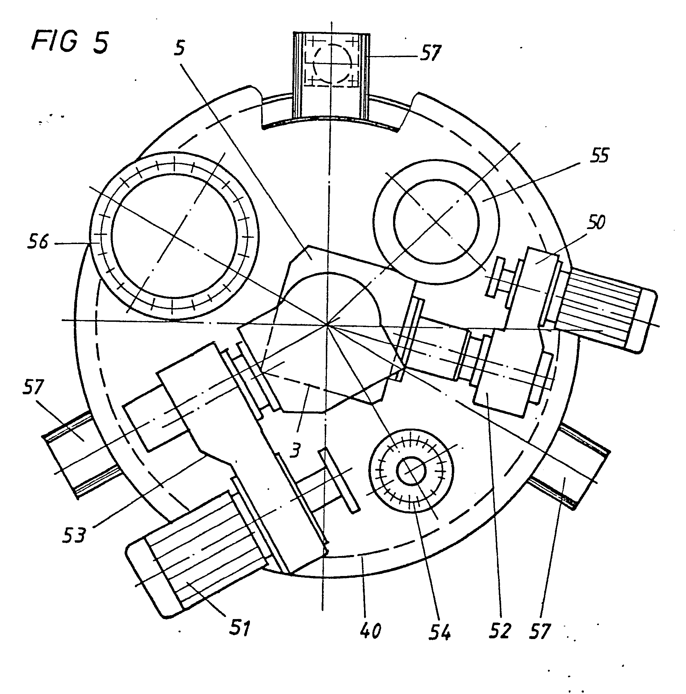

Beide Getriebe 3,5 werden durch die in Fig. 5 näher dargestellten, seitlich angeflanschten Antriebsmotore 50,51 angetrieben. Die Getriebe 3,5 arbeiten auf die in Fig. 2 gezeigten Antriebs-Hohlwelle 16. Aufgrund der hohlen Ausbildung der Antriebshohlwelle 16 ist es möglich, während des Mischvorganges Stoffe in den Mischraum 8 einzuführen.

Die Hohlwelle 16 wird oben durch einen Rotations-Dichtkopf 48 abgeschlossen, dessen Aussehen aus Fig. 4 zu entnehmen ist. In Fig. 5 ist die Draufsicht auf den Behälterdeckel 15 gezeichnet, woraus weitere Einzelheiten zu entnehmen sind.

An den Getrieben 3,5 sind die Antriebsmotoren 51,50 angeflanscht, wobei der Antriebsmotor 51 den Mischschneckenantrieb und der Antriebsmotor 50 den Antrieb des Schwenkarmes 43 durchführt. Beide Antriebsmotoren 50,51 arbeiten zur Drehzahl-Feineinstellung über Vorsatz- oder Regelgetriebe 52,53 auf die zugeordneten Getriebe 3,5.

In einer anderen Ausführungsform der vorliegenden Erfindung können diese Vorsatz- oder Regelgetriebe auch entfallen.

Das Getriebe 3 für den Antrieb der Mischschnecke 12 und das Getriebe 5 für den Antrieb des Schwenkarmes 43 sind übereinander in der Symmetrie-Achse des Behälterdeckels 15 angeordnet. Gemäß Fig. 5 sind noch weitere Durchbrechungen im Behälterdeckel 15 vorgesehen, nämlich ein Flanschstutzen 54 zum Füllen oder Beschicken des Mischers, ferner ein Schauglas 55 zum Beobachten des Mischer-Inhaltes, dann ein weiterer Füllstutzen 56, die radial am Umfang des Mischbehälters 18 angeordnet sind. Mit diesen Auflage-Konsolen 57 wird der gesamte Konus-Schneckenmischer auf einem ortsfest angeordneten Lagerbock aufgehängt, oder an den Füßen aufgestellt.

Der Schwenkarmantrieb gelangt mit der Antriebs-Hohlwelle 16 druckdicht in den Mischraum 8 des Behälters über die Dichtringe 25.

Der Schwenkarm-Antrieb besteht im wesentlichen aus einem zylindrischen Schwenkarm-Gehäuse 59, in das die Verbindungshohlwelle 21 einmündet. In dieses Schwenkarmgehäuse 59 schneidet das zylindrische Gehäuse 9 ein, in dem der Abtrieb des Kegelradgetriebes angeordnet ist. Aus dem zylindrischen Gehäuse 9 tritt die Antriebswelle 58 aus, die gemäß Fig. 2 in Kugellagern gelagert ist, und tritt in ein weiteres, gegenüberliegendes, zylindrisches Gehäuse 9a ein. Wesentlich ist, daß sich hinsichtlich des Getriebeaufbaus und der äußeren Abmessungen die Gehäuse 9,9a genau entsprechen, wodurch eine wesentliche Konstruktions-Vereinfachung erreicht wird.

Wesentlich ist ferner, daß die Gehäuse 59,9 bzw. 43,62 symmetrisch ausgebildet sind, und einen Neigungswinkel von $17^{o}$ zur Horizontalen aufweisen.

Aus dem Gehäuse 62 führt dann eine Antriebswelle 63 heraus, die im Kugellager 90 im Gehäuse 62 gelagert ist, und die drehfest mit der Schneckenwelle 64 der Mischschnecke 12 verbunden ist. Die Antriebswelle 63 ist mit Hilfe von Dichtringen 98,99 aus dem Gehäuse 62 druckdicht herausgeführt.

Seitlich ist am Schwenkarmantrieb ein Schaber 66 angeordnet, der an der Innen seite des konischen Mischbehälters 18 sich mit dem Schwenkarm-Antrieb zusammen entlangbewegt, und die sich dort absetzenden Mischprodukte entfernt und wieder nach unten in den Bereich der Mischschnecke 12 bringt.

Der Getriebeaufbau ist nun folgender:

Das obere Getriebe 3 arbeitet auf die Antriebs-Hohlwelle 16, die koaxial durch das zweite, darunter angeordnete Getriebe 5 hindurchgreift und im unteren Schwenkarmteil im Bereich des Schwenkarmgehäuses 59 drehfest mit dem Kegelrad 37 verbunden ist. Dieses Kegelrad 37 treibt das um einen Achswinkel von $80,5^{o}$

versetzte Kegelrad 33 an, das drehfest mit einer Antriebswelle 58 verbunden ist, die gemäß der obenstehenden Beschreibung jeweils in den Gehäusen 9,9a mit Wälzkugellagern drehbar gelagert ist. Die andere Seite der Antriebswelle 58 ist drehfest mit einem weiteren Kegelrad 33a verbunden, das wiederum im Winkel versetzt ist, und zwar im Winkel von 80,5° nach unten geneigt ist. Dieses Kegelrad 33a kämmt mit einem im Gehäuse 9a drehbar angeordneten und drehfest mit der Schneckenwelle 64 über eine Paßfeder 88 verbundenen Kegelrad 33b. Das Kegelrad 33b sitzt auf einer Antriebswelle, die über eine Flanschverbindung mit der Schneckenwelle 64 gemäß Fig. 2 verbunden ist.

Die Verbindungsflansche tragen in Fig. 2 die Bezeichnungen 101, 102 und 103.

Nachfolgend wird der Antrieb des Schwenkarmes 43 erläutert:

Hierzu ist das Getriebe 5 mit dem Antriebsmotor 50 vorgesehen, welches eine Sonder-Hohlwellen-Ausführung hat, die um ca. 160 mm verlängert ist. Auf diese Hohlwelle wird eine Verbindungs-Hohlwelle 21 mit angeschweißtem Flansch 29 zur Verbindung mit den Schwenkarm-Gehäuseteilen 31,32 angeflanscht. Die Antriebs-Hohlwelle 16 ist über eine Paßfeder 22 mit der Verbindungs-Hohlwelle 21 drehfest, aber axial verschiebbar verbunden. Die Abdichtung am Behälterdeckel 15 erfolgt über einen Dichtflansch 24 mit darin eingelassenen Dichtringen 25.

Der Anschlußflansch 29 mit der Verbindungs-Hohlwelle 21 wird fest an den Gehäuseteilen 31 und 32 des Gehäuses 59 verschraubt, wodurch der Drehantrieb des Schwenkarmes 43 bewerkstelligt ist. Die Antriebs-Hohlwelle 16 ist also über die Verbindungs-Hohlwelle 21 drehfest am Gehäuse 59 über die Gehäuseteile 31,32 des Schwenkarm-Antriebes verbunden.

Dadurch, daß die gesamte Getriebe-Anordnung um den Winkel 14 (vgl. Fig. 1) nach unten geneigt ist, wird der maximale Durchmesser des Mischbehälters wesentlich verringert. Insbesondere bei großen Behältern spielt diese Verringerung eine wesentliche Rolle.

Gemäß der vorliegenden Erfindung ist der vorstehend beschriebene Mischbehälter mit einem bestimmten Nutzvolumen mit einem Durchmesser von 2,90 m ausgebildet, während bei gleicher Antriebsleistung und gleichem Füllvolumen und sonst auch gleichen Verhältnissen die bisher bekannten Behälter des Standes der Technik einen Durchmesser von 3,30 m bis 3,40 m benötigen. Daraus ergeben sich die wesentlichen Vorteile der vorliegenden Erfindung.

Der untere Bereich des Mischers schließt gemäß Fig. 3 mit einem Flansch 65 ab, an dem ein Trennschieber 17 angeordnet ist. Zur weiteren Ausgestaltung der vorliegenden Erfindung ist eine Zerkleinerungsvorrichtung zur Aufbereitung des Mischgutes vorgesehen. Diese Zerkleinerungsvorrichtung dient zur Vermeidung von Klumpen im Mischgut während des Mischvorganges. Es wird hierbei im unteren Bereich ein Rotor vorgesehen, der einen Motor 67 aufweist. Der Motor 67 ist über einen Flansch 68 an einem Flansch 69 des Mischbehälters 18 angeflanscht und greift druckdicht mit einer Antriebswelle und einer nicht näher dargestellten Meßanordnung, die drehfest mit dieser Antriebswelle verbunden
ist, in den Innenraum des Konus-Mischbehälters ein
und dient zur Aufbereitung des Mischgutes.

Die Wirkung des Rotors (Zerkleinerungsmesser) ist in
der Art mit einem Mixer vergleichbar. Der Motor 67
läuft hierbei mit einer Umdrehungszahl von beispielsweise 1.500 bis 3.000 Umdrehungen pro Minute.

Hierdurch wird eine Klumpenbildung vermieden und
evtl. auftretende Klumpen zerkleinert, die sich während des Mischvorganges, insbesondere beim Einführen
von Wasser in das Mischgut, bilden können. Solche
Klumpen haben die Eigenschaft, daß sie aufgrund ihres
größeren Gewichtes in den Bodenbereich des Konus-
Mischers sinken. Sie werden dann durch die umlaufende
Schnecke wieder nach oben gefördert und gelangen hierbei in den Bereich der Zerkleinerungsmesser des Rotors,
und werden hierdurch zerteilt und aufbereitet.
Auf diese Weise wird eine Klumpenbildung mit Sicherheit vermieden und der Mischvorgang erfolgt in einer
außerordentlich guten Qualität mit sehr hohem Durchmischungsgrad. Eine besondere Eigenschaft dieses
Mischers ist also ein besonders schneller und schonender Mischvorgang gegeben.

Hinsichtlich der Möglichkeit des Zumischens flüssiger,
pastöser und pulverförmiger Stoffe in den beschriebenen Konus-Schneckenmischer hat sich die Erfindung noch
die weitere Aufgabe gestellt, eine Vorrichtung zur
Zumischung flüssiger, pastöser und pulverförmiger
Stoffe so weiterzubilden, daß eine Zumischung derartiger Stoffe während des Betriebes des Konus-Schneckenmischers möglich ist, insbesondere auch dann, wenn im Mischbehälter ein Vakuum oder ein Überdruck besteht, oder - allgemein dargestellt - andere Umgebungsbedingungen herrschen, als in der Atmosphäre.

Zur Lösung der gestellten Aufgabe ist die Erfindung dadurch gekennzeichnet, daß koaxial in der rotierenden Antriebshohlwelle ein Zumischrohr aufgenommen ist, das jeweils stirnseitig einerseits aus dem oberen Ende der Antriebshohlwelle herausragt und andererseits aus dem unteren Ende der Antriebshohlwelle ragt und in den Mischraum des Mischbehälters ragt.

Wesentliches Merkmal der vorliegenden Erfindung ist also, daß die Antriebshohlwelle hohl ausgeführt ist, und die Antriebshohlwelle koaxial von einem Zumischrohr durchgriffen ist, das an dem einen Ende aus der Stirnseite der Antriebshohlwelle herausragt, und in den Mischraum des Mischbehälters hineinragt, und am anderen Ende aus dem gegenüberliegenden Ende der Antriebshohlwelle herausragt und dort mit einem Flansch oder einem Rotationsdichtkopf versehen ist, über den die Einspeisung der oben genannten Stoffe in den Mischraum des Mischbehälters erfolgt.

In einer bevorzugten Weiterbildung der vorliegenden Erfindung ist es vorgesehen, daß das Zumischrohr am oberen Ende der Antriebshohlwelle abdichtend von einem Wälzlager aufgenommen ist (Anspruch 10). Mit diesem Merkmal ist es möglich, bei unterschiedlichen Umgebungsbedingungen zwischen dem Mischraum und der umgebenden Atmosphäre beliebige Stoffe in den Mischraum einzubringen.

Verbindet man das untere, in den Mischraum eingreifende Ende des Zumischrohres mit einem Gehäuseflansch des Schwenkarmgehäuses (Anspruch 11), dann ergibt sich hierdurch, daß das Zumischrohr zusammen mit der Antriebshohlwelle rotiert. Um eine Einspeisung am oberen, freien Ende des Zumischrohres zu erreichen, ist ein sogenannter Rotationsdichtkopf vorgesehen, dessen Einspeisungsflansch stillsteht und dessen andere Teile sich drehen. Der Rotationsdichtkopf ist hierbei dichtend auf das obere Ende des Zumischrohres aufgesetzt (Anspruch 12).

Sofern man nach dem Gegenstand des Anspruches 13 am unteren, in den Mischbehälter eingreifenden Teil des Zumischrohres eine Düse anordnet, ist es möglich, die über das Zumischrohr einzuführenden Stoffe weit verteilt in den Mischbehälter einzubringen, weil diese Stoffe unter Druck von der Düse versprüht werden.

Durch diese Art der Zumischung wird das im Mischbehälter befindliche Mischgut mit den zugesprühten Stoffen kontinuierlich, großflächig und gleichmäßig besprüht, und von der an der Behälterwandung entlang laufenden Mischschnecke beigemischt.

Wichtig ist diese Sprüh- bzw. Verteilerwirkung bei feinpulverisierten Stoffen, da sich diese schon während der Einsprühung im Mischbehälter verteilen und somit eine Ansammlung der zugeführten Stoffe vermieden wird. Unter anderem kann durch eine derartige Einsprühung, von z.B. kühlenden Medien, in zur Explosion neigende Stoffe die Explosionsgefahr entscheidend reduziert werden.

Bei einer Weiterbildung dieser vorliegenden Erfindung gemäß dem Anspruch 14 wird vorgeschlagen, daß am unteren, in den Mischbehälter eingreifenden Teilen des Zumischrohres eine Reinigungsvorrichtung für die Dichtringe vorgesehen ist, die zur Abdichtung zwischen der Antriebswelle für die Mischschnecke und dem Gehäuse des Schwenkarmes angeordnet sind.

Hiermit ist es also möglich, nicht nur flüssige, pastöse oder pulverförmige Stoffe über das Zumischrohr in den Mischraum des Mischbehälters einzubringen, sondern es ist darüber hinaus möglich, eine solche Zumischvorrichtung gleichzeitig als Reinigungsvorrichtung zu verwenden, speziell bei flüssigen oder gasförmigen Stoffen. Die Dichtungen zwischen dem äußeren, umlaufenden Ende des Schwenkarmgehäuses und der daraus herausragenden, im Schwenkarmgehäuse rotierenden Antriebswelle der Mischschnecke sind besonders hoch belastet. Zum einen kann Fett von den darüber angeordneten Kugellagern in die Dichtringe eindringen und damit auch das Mischgut verschmutzen, und zum anderen kann das Mischgut auch über die Dichtringe in die Kugellager eindringen und damit die Kugellager einem schnellen Verschleiß unterwerfen.

Die genannte Reinigungsvorrichtung hat die Aufgabe, einen schnellen Verschleiß der Dichtringe zu vermeiden, und die Dichtringe vor Verschmutzungen zu schützen. Hierdurch wird gleichzeitig bewirkt, daß evtl. aus den Kugellagern austretendes Fett nicht über die Dichtringe in das Mischgut eingebracht wird, da sich im Aufnahmeraum des Aufsteckflansches ein Druckpolster zum Schwenkarmgetriebe hin aufbau.

In einer besonderen Ausgestaltung dieser Ausführungsformen wird gemäß dem Anspruch 15 vorgeschlagen, daß die Reinigungsvorrichtung aus einem am Zumischrohr ansetzenden Ansatzrohr besteht, das mit einem am radialen Umfang der Dichtrippe mündenden Aufsteckflansch verbunden ist.

Dieses Ansatzrohr schafft also die Verbindung zwischen dem koaxial in der Antriebswelle sitzenden Zumischrohr und der Reinigungsvorrichtung am freien, umlaufenden Ende des Schwenkarmes.

Hierbei ist gemäß dem Anspruch 16 vorgesehen, daß im Bereich der axialen Mündung des Aufsteckflansches ein radialer Einstich vorgesehen ist, der über einen Kanal in einen radialen Aufnahmeraum mündet, der in axialer Verlängerung unterhalb der Dichtringe vorgesehen ist.

Hiermit wird ein Mediumstau unterhalb der Dichtringe (in deren axialen Verlängerung) erzeugt, so daß der Mediumstau ein Staupolster rings um die Dichtringe erzeugt, und sowohl ein Eindringen von Mischgut in die Dichtringe als auch ein Austreten von Lagerfett aus den Dichtringen vermeidet.

Mit dem Ausdruck "Mediumstau" ist gemeint, daß als Reinigungsmedium nicht nur Preßluft eingeführt werden kann, sondern daß auch der in den Mischbehälter einzubringende, zuzumischende Stoff diese Reinigungswirkung übernehmen kann. Es ist mit dieser Reinigungsvorrichtung also ein doppelter Zweck verfolgt, einmal die abdichtende Wirkung an den Dichtringen der Lagerung der Antriebswelle im Schwenkarmgehäuse und zum anderen gleichzeitig die Zumischung von Stoffen der eingangs genannten Art unter beliebigen Umgebungsbedingungen.

Hierzu ist es gemäß dem Gegenstand des Anspruches 17 vorgesehen, daß zur gleichzeitigen Zumischung von Stoffen über das Zumischrohr und zur gleichzeitigen In-Betrieb-Nahme der Reinigungsvorrichtung im Bereich des Aufnahmeraumes weitere radial auswärts weisende Bohrungen vorhanden sind.

In einer weiteren Ausführungsform der vorliegenden Erfindung ist es vorgesehen, daß das Zumischrohr nicht zusammen mit der Antriebshohlwelle rotiert, sondern feststeht.

Hierzu ist nach dem Gegenstand des Anspruches 18 vorgesehen, daß ein feststehendes Zumischrohr an dem oberen und unteren Ende mit Kugellagern in der rotierenden Antriebshohlwelle gelagert ist.

Es entfällt dann auch der Rotationsmischkopf; stattdessen ist ein fester Flansch am freien, oberen Ende des Zumischrohres vorhanden, über den die einzuspeisenden Stoffe eingeführt werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale
und Vorteile der Erfindung hervor.

Es zeigen:

Fig. 6    Vertikal-Längsschnitt durch den Antriebsteil
          des Schneckenmischers (oberer Teil der Fig. 6);

Fig. 7    Vertikal-Längsschnitt durch den unteren Teil
          der Antriebswelle mit Darstellung des unteren
          Teils des Zumischrohres und Darstellung des
          Kegelradgetriebes für den Antrieb des Schwenkarmes und der Mischschnecke;

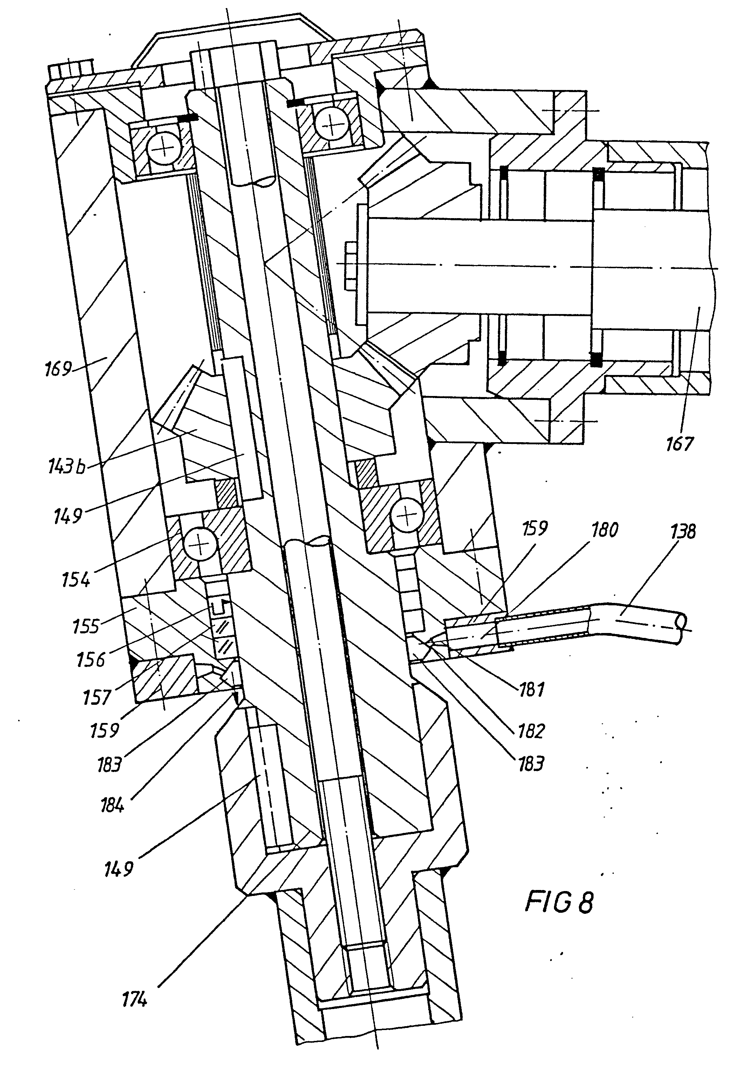

Fig. 8    gleiche Darstellung wie <sup>F</sup>ig. 7 in einer weiteren Ausführungsform mit Darstellung der Reinigungsvorrichtung;

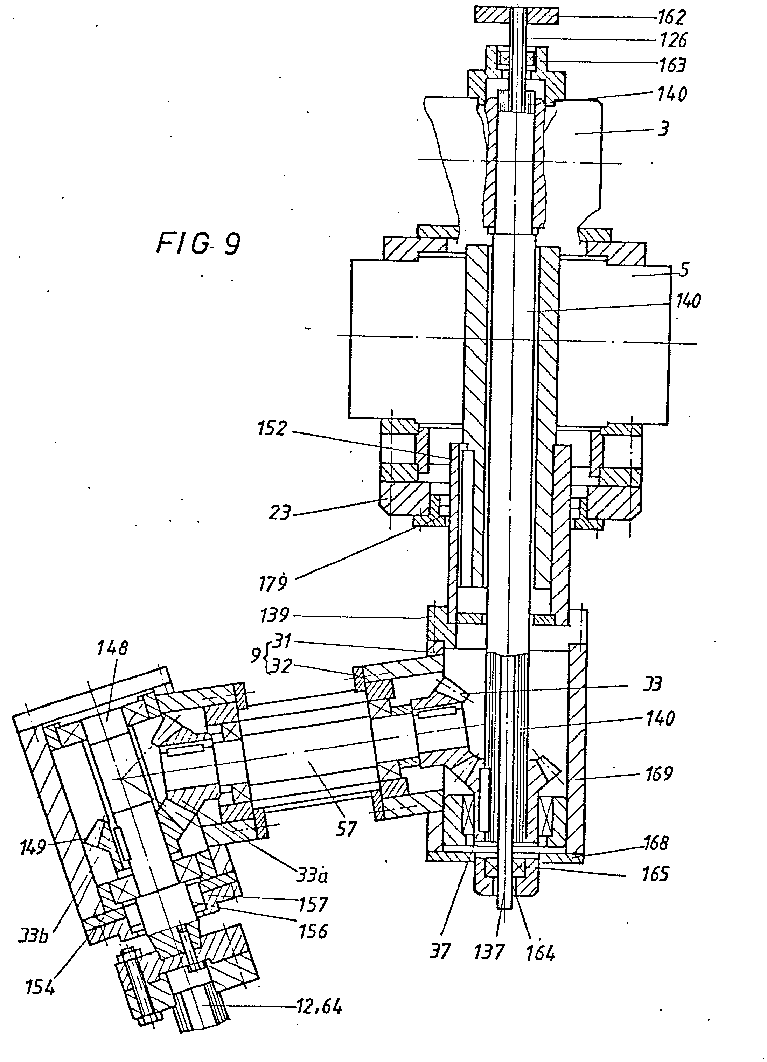

Fig. 9    dritte Ausführungsform im Vergleich zu den
          Fig. 6 bis 10, mit Darstellung eines feststehenden Zumischrohres.

Die Verbindungshohlwelle 152 ist hiermit dicht in den
Dichtringen 179 gefaßt (Fig. 6), damit ist es möglich,
den Konus-Mischer mit einem unterschiedlichen Druck
zur Atmosphäre im Mischraum 8 zu betreiben.

Der Flansch 23 mündet gemäß Fig. 6 in das erste
Getriebe 5 ein. Dieses Getriebe ist dem Schwenkarmantrieb zugeordnet, während das zweite Getriebe 3, das
der Mischschnecke 12 zugeordnet ist, oberhalb des
ersten Getriebes 5 angeordnet ist.

Beide Getriebe 3,5 werden durch die in der Fig. 1 dargestellten, seitlich angeflanschten Antriebsmotoren 50,51 angetrieben. Das Getriebe 3 für die Mischschnecke arbeitet hierbei auf die in Fig. 6 dargestellte Antriebshohlwelle 140. Die Antriebshohlwelle 140 ist mittels einer Paßfeder mit dem Getriebe 3 verbunden. Das Getriebe 5 für den Schwenkarm ist mit einem Anschlußflansch 152 mittels einer Paßfeder verbunden. Das Zumischrohr 126 ist in der Antriebshohlwelle 140 gefaßt. Das Zumischrohr 126 führt koaxial durch die Mittelachsen der Antriebshohlwelle 140 und der Verbindungshohlwelle bzw. den Anschlußflansch 152 und wird an der Oberseite mit einem Lagerflansch 129,130 mit einem darin eingelassenen Wälzlager 131 geführt. Die Abdichtung erfolgt über Dichtringe 132,134. Dadurch, daß das Zumischrohr 126 am unteren, in den Mischraum eingreifenden Ende gemäß Fig. 7 über einen innenliegenden Gehäuseflansch 168 mit dem Schwenkarmgehäuse 59 verbunden ist, rotiert das Zumischrohr zusammen mit dem Anschlußflansch 152 und damit mit dem gesamten Schwenkarmgehäuse 59 und Schwenkarm 9,9a.

Am oberen Einspeisungsende des Zumischrohres 126 ist über ein Verbindungsglied 135 ein Rotationsdichtkopf 136 angebracht, womit ein feststehender Rohrleitungsanschluß ermöglicht wird.

Ein Absperrorgan der Zuleitung (z.B. Kugelhahn - nicht gezeichnet -) ermöglicht einen Druck- oder Vakuumbetrieb.

In Fig. 7 ist der untere Teil der Antriebshohlwelle 140 und des Zumischrohres 126 gezeigt. Am in den Mischraum 8 eingreifenden Ende des Zumischrohres 126 ist eine Düse 137 angeordnet, die zum Versprühen von zuzumischenden Flüssigkeiten gedacht ist und mit dem Gehäuseflansch 168 fest verbunden ist.

Der Durchtritt durch den Behälterdeckel 15 des Konus-Mischers erfolgt dadurch, daß die Verbindungshohlwelle bzw. Anschlußflansch 152 gemäß Fig. 6 druckdicht über Dichtringe 179 drehbar am Behälterflansch 23 gelagert ist. Die druckdichte Verbindung zwischen dem Behälterdeckel 15 und der gesamten Anordnung wird also durch die Lagerung der Verbindungshohlwelle 152 am Behälter durch die Dichtringe 179 erreicht.

Fig. 8 zeigt eine weitere Ausführungsform, aus der ersichtlich ist, daß statt der Düse 137 am unteren, in den Mischraum 8 eingreifenden Ende des Zumischrohres 126 ein Ansatzrohr 138 angeordnet ist, das Teil einer Reinigungsvorrichtung ist.

Zur Reinigung und Freihaltung der Dichtringe 156,157 der Kugellager 154 zur drehbaren Lagerung der Antriebswelle 173 für die Schneckenwelle 174 sind die Dichtringe 156,157 am Umfang von einem Dichtflansch 155 umgeben, an dessen unterem Teil weiterer Aufsteckflansch 159 angeschweißt ist.
Im Bereich der axialen Mündung des Aufsteckflansches 159 ist ein radialer Einstich 181 vorgesehen, der über einen Kanal 182 in einen Aufnahmeraum 183 mündet. Die Mündung ist mit Position 180 bezeichnet. Der Kanal 182 besteht hierbei aus mehreren, parallel nebeneinander angeordneten Bohrungen, die alle in den Aufnahmeraum 183 münden. Das Reinigungsmedium wird nun über das Zumischrohr 126 und das Ansatzrohr 138 über den Aufsteckflansch 159 in die axiale Verlängerung der Dichtringe 156,157 in den Aufnahmeraum 183 eingebracht. Im Aufnahmeraum 183 wird somit ein Überdruck erzeugt, so daß das eingeführte Gas oder Luft in Pfeilrichtung 184 ausströmt und hierdurch verhindert, daß Mischprodukte aus dem Mischraum 8 in den Bereich der Dichtringe 156,157 gelangen können.

Es wird ferner ein Überdruck in Richtung zu den KugellAgern 154 erzeugt, so daß die Fettpackungen der Kugellager 154 vor dem Auslaufen geschützt sind.

In einer weiteren, nicht zeichnerisch näher dargestellten Ausführungsform ist der wahlweise Betrieb einer solchen Reinigungsvorrichtung zusammen mit einer Zumischvorrichtung gemäß der Fig. 9 oder 7 vorgesehen. Es kann hier entweder eine fernbetätigte Umstellvorrichtung vorgesehen werden, mit der es möglich ist, entweder ein Druckgas auf den Aufsteckflansch 159 zu geben, oder andererseits bei Umstellung dieser Vorrichtung entsprechende Stoffe in den Mischraum 8 des Schneckenmischers zuzumischen.

Ebenso ist es in der dritten Ausführungsform vorgesehen, daß über die Reinigungsvorrichtung auch unmittelbar die Zumischung erfolgt; es würde dann kein Gas zugemischt werden, sondern eben der zuzumischende Stoff, der gleichzeitig die oben beschriebene Reinigungsfunktion übernimmt. In diesem Fall würde das Zumischprodukt über die axiale Mündung 180, die Kanäle 182 und den Aufnahmeraum 183 zugeführt werden, womit der Vorteil verbunden ist, daß das zugemischte Produkt sich unmittelbar im Bereich der Mischschnecke befindet, und hierdurch eine besonders günstige, gründliche und innige Vermischung mit dem im Mischbehälter lagernden Mischprodukt im Bereich der Mischschnecke 12 erfolgt.

Für diesen Fall sind im Bereich des Aufnahmeraumes 183 noch weitere Bohrungen vorhanden, die radial auswärts weisen und die insgesamt einen kleineren Querschnitt haben, als der Querschnitt insgesamt der Kanäle 182, mit denen das Mittel in den Aufnahmeraum 183 eingeführt wird. Hierdurch wird erreicht, daß stets ein Überdruck im Aufnahmeraum 183 vorhanden ist und die Dichtpackungen (Dichtringe 156,157) in der oben beschriebenen Weise schützt. Ferner wird erreicht, daß durch die radial auswärts weisenden Bohrungen das Mischprodukt gleichmäßig am Umfang der Mischschnecke 12 verteilt wird, und hierdurch eine besonders innige und schnelle Vermischung gegeben ist.

In einer weiteren, in der Fig. 9 dargestellten Ausführungsform, ist ein druckloser Betrieb vorgesehen, d.h. der Mischraum befindet sich unter atmosphärischen Bedingungen.
Hierzu ist eine Ausführung mit feststehendem Zumischrohr 126 vorgesehen. Am oberen, freien Ende des Zumischrohres 126 ist ein feststehender Anschlußflansch 162 angeordnet, der druckdicht in das Zumischrohr 126 übergeht. Das Zumischrohr ist in abgedichteten Kugellagern 163,165 drehbar zum Schwenkarmgehäuse gelagert, so daß das Schwenkarmgehäuse 169 zwar umläuft, das Zumischrohr 126 aber stillsteht. Die Abdichtung des oberen Teils des Zumischrohres 126 erfolgt in Richtung zum Getriebe (für die Mischschnecke).

Das Zumischrohr 126 durchgreift also koaxial die Antriebshohlwelle 140 und ist im unteren Teil mit einem Flansch 164 verbunden, der drehbar über das abgedichtete Kugellager 165 mit dem gehäuseseitigen Flansch 168 des Schwenkarmantriebes verbunden ist. Es

0042588

- 24 -

ist wiederum eine Düse 137 vorhanden, mit der das Zumischprodukt im Mischraum 8 des Konus-Schneckenmischers gleichmäßig verteilt wird.

Bei einer Ausführung für drucklosen Betrieb gemäß Fig. 9 können relativ einfache und kostengünstige Dichtmittel verwendet werden, weil hier Druckprobleme nicht auftreten.

Anhand der Fig. 7, 8, 9 sei nun die Funktion des Antriebes des Schwenkarmgehäuses 169 und des Antriebes der Mischschnecke 12 mit der Schneckenwelle 174 erläutert.

Das obere Getriebe 3, welches der Mischschnecke 12 zugeordnet ist, arbeitet auf die Antriebshohlwelle 140, die koaxial durch das zweite, darunter angeordnete Getriebe 5 hindurchgreift, und im unteren Schwenkarmteil im Bereich des Schwenkarmgehäuses 169 drehfest mit dem Kegelrad 147 verbunden ist. Das Kegelrad 147 treibt das um einen Achswinkel von $80,5^{o}$ versetzte Kegelrad 143 an, das drehfest mit einer Antriebswelle 167 (Fig. 7 und 8) verbunden ist, die in den Gehäusen 9,9a mit Wälzkugellagern drehbar gelagert ist. Die andere Seite der Antriebswelle 167 ist drehbar mit einem weiteren Kegelrad 33a verbunden, das im Winkel von $80,5^{o}$ nach unten geneigt ist. Dieses Kegelrad 33a kämmt mit einem im Gehäuse 9a drehbar angeordneten und drehfest mit der Schneckenwelle 174 über eine Paßfeder 149 verbundenen Kegelrad 33b.

Das Kegelrad 33b sitzt auf einer Antriebswelle, die über eine Flanschverbindung mit der Schneckenwelle 174 gemäß Fig. 7 und 8 verbunden ist.

Nachfolgend wird der Antrieb des Schwenkarmes 153 erläutert.

Hierzu ist das Getriebe 5 mit dem Antriebsmotor 160 vorgesehen, welches eine Sonder-Hohlwellenausführung aufweist, die um ca. 160 mm verlängert ist. Auf diese Hohlwelle wird eine Verbindungshohlwelle 152 mit angeschweißtem Flansch 139 zur Verbindung mit den Schwenkarm-Gehäuseteilen 31,32 angeflanscht. Die Antriebshohlwelle 140 ist über eine Paßfeder 166 gemäß Fig. 6 mit der Verbindungshohlwelle 152 drehfest, aber axial verschiebbar verbunden. Die Abdichtung am Behälterdeckel 15 erfolgt über einen Flansch 23 mit darin eingelassenen Dichtringen 179 gemäß Fig. 6.

Der Flansch 139 (vgl. Fig. 9) mit der Verbindungshohlwelle 152 wird fest an den Gehäuseteilen 31 und 32 des Schwenkarmgehäuses 169 verschraubt, wodurch der Drehantrieb des Schwenkarmes 153 hergestellt ist. Die Antriebshohlwelle 140 ist also über die Verbindungshohlwelle 152 drehfest am Schwenkarmgehäuse 169 über die Gehäuseteile 31,32 des Schwenkarmantriebes verbunden.

Erfindungsgemäß kann eine Trocknung mit oder ohne Vakuum in dem neuen Konusmischer stattfinden, unabhängig davon, wie die Zumischung erfolgt, dabei bezieht sich das Anwendungsgebiet dieser Erfindung zum Trocknen von Mischprodukten auf die pharmazeutische Industrie und die Lebensmittelindustrie. Im erstgenannten Fall werden Grundstoffe für die Tabletten-Herstellung getrocknet und gemischt, im zweiten Fall wird z.B. Kakao-Bruch aufbereitet. Vorzugsweise findet die Trocknung im Vakuum statt.

Aufgabe der Erfindung ist es, eine Vorrichtung zur Trocknung von Mischprodukten der genannten Art so weiterzubilden, daß eine schonende, energiesparende und gleichmäßige Trocknung von Mischprodukten im Mischbehälter erfolgt, wobei in Bezug auf die zugeführte Energie die Trocknung wesentlich beschleunigt werden soll.

Zur Lösung der gestellten Aufgabe ist die Erfindung dadurch gekennzeichnet, daß die Beheizung des Mischbehälters dadurch erfolgt, daß der Mischbehälter doppelwandig ausgebildet ist und einen Heizmantel aufweist, der von einem Heizmedium durchströmt ist.

In einer ersten Ausführungsform der vorliegenden Erfindung ist es vorgesehen, daß der Mischbehälter allein (ohne Deckel) einen solchen Heizmantel aufweist.

In einer zweiten Ausführungsform ist es vorgesehen, daß sowohl der Mischbehälter als auch der den Mischbehälter nach oben abschließende Deckel einen solchen Heizmantel aufweisen.

Wesentlich ist in beiden Fällen, daß die Außenwände des Heizmantels des Mischbehälters sowie der Deckel mit einer Wärmeisolierung versehen sind. Eine solche Wärmeisolierung ist z.B. eine Auskleidung mit Mineralfaserwolle oder eine Ausschäumung des Doppelmantels mit einem wärmeisolierenden Hartschaum.

Es ergibt sich hierdurch eine ausgezeichnete Wärmeausnutzung und ein gleichmäßiger Wärmeübergang von der Behälterinnenwandung in Richtung zum Mischgut, wodurch eine besonders schonende und gleichmäßige Trocknung des Mischgutes erreicht wird.

Aufgrund der Außenisolierung des gesamten Mischbehälters mit Deckel mit Hilfe einer Wärmeisolierung wird der Energieverbrauch wesentlich herabgesetzt und die Umgebung des Mischbehälters wird nicht mehr aufgeheizt, was eine wesentliche Entlastung der Bedienungsperson darstellt und ein umweltfreundliches Trocknungsverfahren gewährleistet.

In einer Weiterbildung der vorliegenden Erfindung ist es zur Lösung der Aufgabe der schnellen Trocknung des Mischproduktes vorgesehen, daß neben der Beheizung des Mischbehälters über einen Heizmantel auch eine Vakuumbeaufschlagung des Mischproduktes erfolgt. Durch die Anlegung von Vakuum an das Mischprodukt wird der Trocknungsvorgang wesentlich beschleunigt. Während des Trocknungsvorganges erfolgt ständig eine Absaugung von dem Behälterinneren in Richtung zu einer Vakuumpumpe und durch diese Vakuumpumpe hindurch. Es werden hierdurch die während des Mischvorganges anfallenden Gase, Dämpfe oder Stäube abgesaugt, so daß hierdurch nicht der Mischvorgang beeinträchtigt werden kann und die Qualität des Mischproduktes noch wesentlich gesteigert wird, weil es insbesondere staubfrei ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im folgenden wird die Erfindung anhand von lediglich einen Ausführungsweg darstellender Zeichnung näher erläutert. Hierbei gehen aus der Zeichnung und deren Beschreibung weitere erfindungswesentliche Merkmale und Vorteile der Erfindung hervor.

Fig. 1 zeigt neben anderen Merkmalen die erfindungsgemäße Trocknung bei einem Konus-Schneckenmischer.

In der Fig. 1 ist ein Mischbehälter 8 dargestellt, der in Richtung zu seiner Bodenfläche konisch zuläuft. Am Boden ist ein Auslaufschieber 13 angeordnet, mit dem eine Austragung des Mischproduktes über einen Auslauf möglich ist. Der Mischbehälter 8 wird an seiner Oberseite durch einen Deckel 15 abgedeckt.

Im gezeichneten Ausführungsbeispiel ist lediglich der konische Mischbehälter 8 doppelwandig mit einem Heizmantel 7 ausgerüstet. Der Heizmantel ist von einem Heizmedium durchströmt. Das Heizmedium besteht in einer bevorzugten Ausgestaltung der vorliegenden Erfindung aus Heißdampf mit einer Temperatur bis zu 170°C. Es kann aber auch ein Heizgas oder ein anderes Medium, z.B. eine Flüssigkeit, verwendet werden. Am Heizmanteleintrittsstutzen 6 wird der Heißdampf eingeführt und tritt in den Heizmantel 7 ein. An der Unterseite des Heizmantels ist ein Heizmantelaustrittsstutzen 11 angeordnet, an dem auch der Kondensatablauf erfolgt.

Neben dem Heizmantel 7 ist auch der Deckel 15 wärmeisoliert ausgebildet.
Dies hat den Vorteil, daß eine Kondensation an der Innenseite des Deckels 15 vermieden wird und das Mischgut nicht durch eine sonst anfallende Kondensation durchfeuchtet wird. Die Wärmeisolierung umgibt also den gesamten Mischbehälter, so daß an keiner Stelle eine Kondensation stattfinden kann und hierdurch eine Durchfeuchtung des Mischgutes zu befürchten wäre.

Die Mischschnecke 12 arbeitet an der konischen Behälterwandung mit einer Drehzahl von ca. 60 Umdrehungen pro Minute und wird durch das Schneckenantriebsgetriebe 3 angetrieben. Zusätzlich bewegt sich der Schwenkarm 43 mit der Mischschnecke 12 entlang der Behälterwandung mit einer Umdrehungszahl von ca. 2 Umdrehungen pro Minute. Dieses Mischverfahren gewährleistet eine außerordentlich schonende Behandlung des Mischgutes. Durch den angeschlossenen Vakuumpumpenstand 1 können aus dem Mischgut freigewordene Gase, Stäube oder Dämpfe abgezogen werden.

Um die Effektivität des Trocknungsvorganges zu erhöhen, wird der austretende Naßdampf durch den angeschlossenen Vakuumpumpenstand 1 abgezogen.

Hierbei ist ein Vakuumstutzen 4 vorgesehen, an dem eine strichpunktierte Leitung ansetzt, über den in Pfeilrichtung 19 Stäube, Dmpfe oder der entstehende Naßdampf über einen Filter 2 abgesaugt wird. Am Ausgang des Filters 2 ist eine Leitung 20 angeschlossen, die in einen Kondensator 26 mündet. Der Kondensator ist mit Kühlwasser durchströmt, wodurch der Flüssigkeitsanteil im Naßdampf auskondensiert wird und in einem darunter angeordneten Kondensatbehälter 27 aufgefangen wird. Die Evakuierung erfolgt über eine Flüssigkeitsringpumpe 28, die in einer anderen Ausführungsform auch als Wälzkolbenpumpe ausgebildet sein kann.

Wesentlich ist ferner, daß das Schwenkarmantriebsgetriebe 5 und das Schneckenantriebsgetriebe 3 koaxial übereinander am Deckel 15 angeordnet sind und die Durchführung durch den Deckel 15 mit relativ geringem Querschnitt hierdurch erfolgen kann, so daß keinerlei Wärmeverluste zu befürchten sind. An den Antriebsgetrieben 3,5 setzen Antriebsmotoren 50,51 an.

Die Antriebswelle mündet zunächst in den Schwenkarm 43 mit einem darin angeordneten Schwenkarmgetriebe, an den getriebemäßig das Antriebsgetriebe für die Mischschnecke 12 angeflanscht ist.

Die Behälterform ist an sich beliebig; es kommt auch eine andere Form als eine konische Form in Betracht.

Patentansprüche
--------------------------------

1. Konus-Schneckenmischer, bestehend aus einem konischen Mischbehälter mit einer parallel zur Innenwand
an einem Schwenkarm umlaufenden, sich drehenden Mischschnecke, d a d u r c h   g e k e n n z e i c h n e t ,
daß der Schwenkarm (43) zumindest teilweise im Innenraum des gewölbten Behälterdeckels (15) angeordnet ist.

2. Konus-Schneckenmischer nach Anspruch 1,
d a d u r c h   g e k e n n z e i c h n e t , daß der
Antrieb des Schwenkarms (43) durch eine zentral und
abdichtend den Behälterdeckel (15) durchgreifende Hohlwelle (16,21) erfolgt, die auf zwei im Abstand voneinander angeordnete, vom Gehäuse (9,9a) ummantelte
Kegelradgetriebe arbeitet und daß das am fernen Ende
des Schwenkarmes (43) angeordnete Gehäuse (9a) um einen
Winkel (14) in Richtung zur Horizontalen nach unten geneigt ist.

3. Konus-Schneckenmischer nach Anspruch 2,
d a d u r c h   g e k e n n z e i c h n e t , daß der
Winkel (14) 8 1/2 Grad beträgt.

4. Konus-Schneckenmischer nach Anspruch 2,
d a d u r c h   g e k e n n z e i c h n e t , daß die
Hohlwelle (16,21) aus einer Antriebshohlwelle (16)
besteht, und aus einer mit dieser drehfest verbundenen
Verbindungshohlwelle (21), die in dem ersten Gehäuse
(9,59) drehfest mit einem Kegelrad (37) verbunden ist,
das mit einem in seiner Längsachse im Winkel (14) zur
Horizontalen nach unten geneigten weiteren Kegelrad
(33) in Eingriff steht und daß dieses Kegelrad (33) über eine Antriebswelle (58) drehfest mit einem weiteren Kegelrad (33a) verbunden ist, das seinerseits mit einem Kegelrad (33b) kämmt, das drehfest mit der Schneckenwelle (64) der Mischschnecke (12) verbunden ist.

5. Konus-Schneckenmischer nach Anspruch 1 bis 4, d a d u r c h  g e k e n n z e i c h n e t , daß der Drehantrieb des Schwenkarmes (43) dadurch erfolgt, daß über ein von einem Antriebsmotor (50) beaufschlagtes Getriebe (5) die Hohlwelle (16,21) angetrieben ist, die über eine Paßfeder (22) drehfest mit dem Schwenkarmgehäuse (59) verbunden ist.

6. Konus-Schneckenmischer nach einem der Ansprüche 1 bis 5, d a d u r c h  g e k e n n z e i c h n e t , daß die Mischschnecke (12) mit etwa 60 Upm und der Schwenkarm (43) mit etwa 2 Upm angetrieben sind.

7. Konus-Schneckenmischer nach einem der Ansprüche 1 bis 6, d a d u r c h  g e k e n n z e i c h n e t , daß im unteren Bereich des Mischraumes (8) eine motorisch betriebene Zerkleinerungsvorrichtung (67,68,69) für das Mischgut angeordnet ist.

8. Konus-Schneckenmischer nach Anspruch 8, d a d u r c h  g e k e n n z e i c h n e t , daß die Zerkleinerungsvorrichtung (67,68,69) aus einem sich drehenden Satz von Messern besteht, die in das Mischgut greifen.

9. Vorrichtung zur Zumischung flüssiger, pastöser und pulverförmiger Stoffe in einem Konus-Schneckenmischer, der aus einem konischen Mischbehälter mit einer parallel zur Innenwand an einem Schwenkarm umlaufenden, sich drehenden Mischschnecke besteht, und der Antrieb des Schwenkarmes durch zentral und abdichtend den Behälterdeckel durchgreifende Antriebshohlwelle erfolgt, d a d u r c h   g e k e n n z e i c h n e t , daß koaxial in der rotierenden Antriebshohlwelle (140) ein Zumischrohr (126) aufgenommen ist, das jeweils stirnseitig einerseits aus dem oberen Ende der Antriebshohlwelle (140) herausragt und andererseits aus dem unteren Ende der Antriebshohlwelle (140) ragt und in den Mischraum (8) des Mischbehälters (18) ragt.

10. Vorrichtung nach Anspruch 9, d a d u r c h   g e k e n n z e i c h n e t , daß das Zumischrohr (126) am oberen Ende der Antriebshohlwelle (140) abdichtend (Dichtringe 132,134) von einem Wälzlager (131) aufgenommen ist, (Fig. 6).

11. Vorrichtung nach Anspruch 9 oder 10, d a d u r c h   g e k e n n z e i c h n e t , daß das untere, in den Mischraum (8) eingreifende Ende des Zumischrohres (126) mit einem Gehäuseflansch (168) des Schwenkarmgehäuses (169) fest verbunden ist, (Fig. 7).

12. Vorrichtung nach den Ansprüchen 10 und 11, d a d u r c h   g e k e n n z e i c h n e t , daß am oberen Ende des Zumischrohres (126) ein Rotationsdichtkopf (136) angeordnet ist, (Fig. 6).

13. Vorrichtung nach Anspruch 11, d a d u r c h   g e k e n n z e i c h n e t , daß am

unteren, in den Mischbehälter (8) eingreifenden Teil des Zumischrohres (126) eine Düse (137) angeordnet ist, (Fig. 7).

14. Vorrichtung nach einem der Ansprüche 9 bis 12, dadurch gekennzeichnet, daß am unteren, in den Mischbehälter (8) eingreifenden Teil des Zumischrohres (126) eine Reinigungsvorrichtung (138,159) für die Dichtringe (156,157) vorgesehen ist, die zur Abdichtung zwischen der Antriebswelle (174) für die Mischschnecke (12) und dem Gehäuse (169) des Schwenkarmes (153) angeordnet sind, (Fig. 1, 8).

15. Vorrichtung nach Anspruch 14, dadurch gekennzeichnet, daß die Reinigungsvorrichtung aus einem am Zumischrohr (126) ansetzenden Ansatzrohr (138) besteht, das mit einem am radialen Umfang der Dichtringe (156,157) mündenden Aufsteckflansch (159) verbunden ist, (Fig. 8).

16. Vorrichtung nach Anspruch 14 und 15, dadurch gekennzeichnet, daß im Bereich der axialen Mündung des Aufsteckflansches (159) ein radialer Einstich (181) vorgesehen ist, der über einen Kanal (182) in einen radialen Aufnahmeraum (183) mündet, der in axialer Verlängerung unterhalb der Dichtringe (156,157) vorgesehen ist, (Fig. 8).

17. Vorrichtung nach einem der Ansprüche 14 bis 16, dadurch gekennzeichnet, daß mit der Reinigungsvorrichtung (138,159) auch eine Zumischung von Stoffen über das Zumischrohr (126) in den Mischbehälter (8) derart erfolgt, daß im Bereich des Aufnahmeraumes (183) eine oder mehrere radial auswärts weisende Bohrungen vorhanden sind.

18. Vorrichtung nach einem der Ansprüche 9 oder 10, sowie einem der Ansprüche 13 bis 17, d a d u r c h   g e k e n n z e i c h n e t , daß ein feststehendes Zumischrohr (126) an dem oberen und unteren Ende mit Kugellagern (163,165) in der rotierenden Antriebshohlwelle (140) gelagert ist, (Fig. 9).

19. Vorrichtung zur Trocknung von Mischprodukten, bestehend aus einem in Richtung zur Bodenfläche konisch zulaufenden Mischbehälter, in dem eine Mischschnecke angeordnet ist, und einer an der Wandung des Mischbehälters angeordneten Beheizung, d a d u r c h   g e k e n n z e i c h n e t , daß die Beheizung des Mischbehälters (8) dadurch erfolgt, daß der Mischbehälter (8) doppelwandig ausgebildet ist und einen Heizmantel (7) aufweist, der von einem Heizmedium durchströmt ist.

20. Vorrichtung nach Anspruch 19, d a d u r c h   g e k e n n z e i c h n e t , daß zusätulich zum Mischbehälter (8) auch der Deckel (15) einen Heizmantel aufweist.

21. Vorrichtung nach Anspruch 19 oder 20, d a d u r c h   g e k e n n z e i c h n e t , daß die Außenwände des Heizmantels (7) des Mischbehälters (8) mit einer Wärmeisolierung verkleidet sind.

22. Vorrichtung nach Anspruch 21, d a d u r c h   g e k e n n z e i c h n e t , daß der Deckel (15) mit einer Wärmeisolierung versehen ist.

23. Vorrichtung nach Anspruch 19 bis 22, d a d u r c h   g e k e n n z e i c h n e t , daß zur beschleunigten Trocknung der Mischprodukte neben der Beheizung des Mischbehälters (8) eine Vakuumbeaufschlagung des Mischproduktes erfolgt.

24. Vorrichtung nach einem der Ansprüche 19 bis 23, d a d u r c h   g e k e n n z e i c h n e t , daß das Heizmedium Heißdampf ist.

25. Vorrichtung nach einem der Ansprüche 19 bis 24, d a d u r c h   g e k e n n z e i c h n e t , daß das an das Mischprodukt angelegte Vakuum etwa 5 - 10 Torr beträgt.

FIG 1

Filter

Kühlwasser

Kondensator

Kondensatbehälter

Flüssigkeit Ringpumpe

Flüssigkeit

Pumpenstand

0042588

FIG 2

FIG 3

FIG 4

FIG 5

0042588

FIG 6

## FIG 7

140

167

169

137          126          168

0042588

FIG 8

0042588

FIG. 9